# EUROPÄISCHE PATENTSCHRIFT

(11) **EP 4 659 976 B1**
(45) Veröffentlichungstag und Bekanntmachung des Hinweises auf die Patenterteilung: **05.08.2026**
(21) Anmeldenummer: 24180354.3
(22) Anmeldetag: 06.06.2024
(51) Int. Cl.: B60J 7/02

(54) **RAHMENANORDNUNG FÜR EIN FAHRZEUGDACH**
FRAME ASSEMBLY FOR A VEHICLE ROOF
ENSEMBLE CADRE POUR TOIT DE VÉHICULE

(43) Veröffentlichungstag der Anmeldung: 10.12.2025
(73) Patentinhaber: Webasto SE, 82131 Stockdorf (DE)
(72) Erfinder: Baumann, Matthias, 82131 Stockdorf (DE); Popovici, Andrei, 82131 Stockdorf (DE)
(74) Vertreter: Epping - Hermann - Fischer

(56) Entgegenhaltungen:
- DE-A1- 3 822 258

## Beschreibung

Die vorliegende Erfindung betrifft eine Rahmenanordnung für ein Fahrzeugdach zur Lagerung eines ausstellbaren und verschiebbaren Deckels. Die vorliegende Erfindung betrifft ferner ein Fahrzeug umfassend ein Fahrzeugdach und eine solche Rahmenanordnung, die mit dem Fahrzeugdach fest gekoppelt ist.

Bei einigen Kraftfahrzeugen ist im Fahrzeugdach eine Dachöffnung integriert, die mit einem Deckel insbesondere aus Glas oder Kunststoff verschlossen ist, um so eine Durchsicht aus dem Kraftfahrzeug zu realisieren. Ein Beispiel ist in der DE 38 22 258 A1 offenbart. Gegebenenfalls ist der Deckel dieser Dachanordnung verschiebbar ausgebildet, um außer einer Durchsicht auch auf Wunsch einen Luftaustausch zu ermöglichen. Der Deckel kann dabei eine Dachöffnung entweder in einer Schließstellung des Deckels verschließen oder in weiteren Stellungen mindestens teilweise freigeben. Daneben finden sich auch Dachanordnungen mit einer Rollovorrichtung, auch Verdunklungsvorrichtung genannt, zur Verwendung in einem Kraftfahrzeug. Derartigen Dachanordnungen ist gemein, dass eine entsprechende Mechanik zur Betätigung des beweglichen Deckels und/oder der Rollovorrichtung Führungsschienen aufweist, in denen Elemente der Mechaniken verschiebbar geführt sind. Diese Führungsschienen sind beispielsweise aus Aluminium gefertigt und mit einem oder mehreren Dachrahmenelementen einer Rahmenanordnung verschraubt.

Es ist wünschenswert, eine Rahmenanordnung für ein Fahrzeugdach zu schaffen, die nachhaltiger und kostengünstiger ist.

Es wird eine Rahmenanordnung für ein Fahrzeugdach zur Lagerung eines ausstellbaren und verschiebbaren Deckels bereitgestellt. Die Rahmenanordnung umfasst ein Rahmenelement, das sich entlang einer ersten Haupterstreckungsachse erstreckt. Das Rahmenelement umfasst einen Hauptabschnitt, der in einer ersten Haupterstreckungsebene liegt, die durch die erste Haupterstreckungsachse und eine zweite Haupterstreckungsachse aufgespannt wird. Das Rahmenelement umfasst einen ersten Verstärkungsabschnitt, der mit dem Hauptabschnitt verbunden ist und entlang einer Hochachse aus der ersten Haupterstreckungsebene herausragt. Die Rahmenanordnung umfasst weiterhin eine erste Kunststoffführungsschiene mit mindestens einem Aufnahmekanal für einen Schlitten, wobei sich die erste Kunststoffführungsschiene entlang der ersten Haupterstreckungsachse und der Hochachse erstreckt und wobei die erste Kunststoffführungsschiene den ersten Verstärkungsabschnitt zur Stabilisierung der ersten Kunststoffführungsschiene zumindest teilweise umgibt.

Die Rahmenanordnung umgibt beispielsweise eine Dachöffnung in dem Fahrzeugdach. Die Rahmenanordnung trägt mit der angeformten Kunststoffführungsschiene einen Deckel. Der Deckel ist dazu ausgebildet eine Fahrzeugöffnung in dem Fahrzeugdach zu verschließen. Das Fahrzeugdach, der Deckel und die Rahmenanordnung werden umschlossen von einer ersten Fahrzeuglängsseite, einer zweiten Fahrzeuglängsseite, einer Heckscheibe und einer Frontscheibe eines Fahrzeugs. Die erste Haupterstreckungsachse erstreckt sich von der Heckscheibe zur Frontscheibe. Die erste Fahrzeuglängsseite verbindet die Heckscheibe und die Frontscheibe. Die zweite Fahrzeuglängsseite liegt der ersten Fahrzeuglängsseite gegenüber und verbindet ebenfalls die Heckscheibe und die Frontscheibe. Die zweite Haupterstreckungsachse liegt quer zur ersten Haupterstreckungsachse und erstreckt sich von der ersten Fahrzeuglängsseite zur zweiten Fahrzeuglängsseite. Die erste Haupterstreckungsachse und die zweite Haupterstreckungsachse spannen eine erste Haupterstreckungsebene auf. Das Fahrzeugdach, der Deckel und die Rahmenanordnung sind entlang der ersten Haupterstreckungsebene angeordnet.

Die Rahmenanordnung umfasst mindestens ein Rahmenelement. Beispielsweise werden zwei Rahmenelemente in der Rahmenanordnung verwendet. Das mindestens eine Rahmenelement erstreckt sich entlang der ersten Haupterstreckungsachse. Das Rahmenelement ist an der ersten Fahrzeuglängsseite angeordnet. Ein weiteres Rahmenelement ist entlang der zweiten Fahrzeuglängsseite angeordnet.

Das Rahmenelement umfasst den ersten Hauptabschnitt und den ersten Verstärkungsabschnitt. Der erste Hauptabschnitt erstreckt sich entlang der ersten Haupterstreckungsachse und der zweiten Haupterstreckungsachse. Der erste Verstärkungsabschnitt erstreckt sich entlang der ersten Haupterstreckungsachse und einer Hochachse, die aus der ersten Haupterstreckungsebene herausragt. Die Hochachse steht beispielsweise senkrecht oder geneigt auf der ersten Haupterstreckungsebene.

Die Kunststoffführungsschiene erstreckt sich entlang der ersten Haupterstreckungsachse, entlang derer sich mindestens ein Aufnahmekanal für einen Schlitten erstreckt. Der Schlitten ist dazu ausgebildet in der ersten Kunststoffführungsschiene geführt zu werden und relativ zu der ersten Kunststoffführungsschiene bewegt zu werden. Der Schlitten weist beispielsweise einen Hauptteil und zwei damit verbundene Seitenteile auf. Der Hauptteil ist entlang der ersten Haupterstreckungsebene angeordnet und die beiden Seitenteile ragen aus dem Hauptteil entlang der Hochachse heraus. Die Seitenteile sind mit einem ersten Ende mit dem Hauptteil verbunden. Zusätzlich können die beiden Seitenteile an einem zweiten Ende des Schlittens, welches dem ersten Ende entlang der Hochachse gegenüberliegt, jeweils einen klammerartigen Halteabschnitt aufweisen. Die Geometrie des Schlittens ermöglicht es somit, dass der Schlitten in mindestens einen Aufnahmekanal der Kunststoffführungsschiene mit dem Halteabschnitt eingreift. Der Schlitten greift beispielsweise in zwei Aufnahmekanäle, die sich zu beiden Seiten der Kunststoffführungsschiene entlang der ersten Haupterstreckungsachse befinden mit jeweils einem Halteabschnitt ein. Alternativ weist der Schlitten nur einen Halteabschnitt auf, der in einen Aufnahmekanal eingreift.

Das Antriebskabel ist mit dem Schlitten gekoppelt. Das Antriebskabel ist ausgebildet, sowohl Zug- als auch Schubkräfte auf den Schlitten zu übertragen. Insbesondere ist das Antriebskabel zug- und drucksteif ausgelegt.

Die erste Kunststoffführungsschiene ermöglicht es in vorteilhafterweise Aussparungen oder Bereiche für andere funktionelle Baugruppen zu realisieren. Beispielsweise können Wasserabläufe ebenfalls in der ersten Kunststoffführungsschiene integriert werden, ohne dass eine aufwendige Nachbearbeitung der ersten Kunststoffführungsschiene oder eine zusätzliche Montage mittels Befestigungsmittel notwendig wird.

Die erste Kunststoffführungsschiene ersetzt demnach Bauteile aus Metall, wodurch das Gewicht der gesamten Rahmenanordnung reduziert wird. Die Verwendung des ersten Verstärkungsabschnitts des Rahmenelements zur Stabilisierung der ersten Kunststoffführungsschiene führt zu einem geringeren Gewicht bei gleicher Stabilität oder zu einer erhöhten Stabilität bei gleichem Gewicht im Vergleich zu einer Führungsschiene aus Aluminium. Der erste Verstärkungsabschnitt bietet demnach zusätzlichen Halt für die erste Kunststoffführungsschiene, was insgesamt eine stabilere Rahmenanordnung schafft.

Der erste Verstärkungsabschnitt und die Kunststoffführungsschiene bilden gemeinsam eine einheitliche Baugruppe. Die einstückige Lösung trägt erheblich dazu bei, dass die Steifigkeit, beispielsweise die Torsionssteifigkeit, und damit eine Dauerfestigkeit der Verbindung zwischen Führungsschiene und Rahmenelement erhöht sind. Durch das Weglassen zusätzlicher Bauteile, wie Befestigungsmittel, ist die Biegesteifigkeit erheblich erhöht.

Vorteilhafterweise wird mit der ersten Kunststoffführungsschiene die Nachhaltigkeit verbessert, da die CO2-Bilanz bei einer Führungsschiene aus Kunststoff gegenüber einer Führungsschiene aus Metall positiver ist. Die CO2-Emissionen einer Führungsschiene aus Kunststoff ist beispielsweise gegenüber Führungsschienen aus Aluminium verringert. Zudem ist eine potenzielle Nachbearbeitung der ersten Kunststoffführungsschiene einfacher als die Nachbearbeitung einer Führungsschiene aus Metall. Vorteilhafterweise wird das zusätzliche Material für den Verstärkungsabschnitt des Rahmenelements aus den Resten des Materials, die bei der Fertigung der Rahmenanordnung entstehen, bereitgestellt. Das zusätzliche Material für den Verstärkungsabschnitt ist beispielswese Metall, insbesondere Stahl. Durch den Wegfall weiterer Bauteile, wie Befestigungsmittel wird weiterhin dazu beigetragen, dass ungewollte Geräusche, etwa ein Knarzen im Verbindungsbereich, vermieden werden.

Gemäß zumindest einer Ausführungsform umgibt die erste Kunststoffführungsschiene den Hauptabschnitt zur Stabilisierung der ersten Kunststoffführungsschiene zumindest teilweise.

Der Hauptabschnitt stabilisiert die erste Kunststoffführungsschiene noch weiter. Zudem verhindert der Hauptabschnitt, dass die Kunststoffführungsschiene ungewollt vom ersten Verstärkungsabschnitt verrutscht oder abrutscht.

Gemäß zumindest einer Ausführungsform ist die erste Kunststoffführungsschiene als Spritzgussbauteil ausgebildet.

Spritzgussbauteile haben den Vorteil, dass durch das umspritzte Rahmenelement keine weiteren Bauteile zur Justierung zwischen Rahmenelement und Kunststoffführungsschiene notwendig sind. Solche Ausrichtungs- oder Justage Elemente entfallen daher. Ein nachträgliches Anbringen eines separaten Zwischenstücks an die Kunststoffführungsschiene, etwa ein Anbindungskonnektor, zum Koppeln mit dem Rahmenelement entfällt ebenso. Ein solches Zwischenstück, auch Adapter- oder Verbindungsstück genannt, würde beispielsweise an die Kunststoffführungsschiene im Bereich einer Ausnehmung in der Kunststoffführungsschiene montiert, beispielsweise mittels einer Klemmverbindung. Ein solches Zwischenstück würde daher Montageaufwand und damit höhere Kosten verursachen. Das Rahmenelement ist somit direkt mit der Kunststoffführungsschiene gekoppelt.

Die Kunststoffführungsschiene wird für eine einfache Formgebung in einem Spritzgussprozess hergestellt. Vorteilhafterweise ist dadurch eine geringe Nacharbeit der Kunststoffführungsschiene notwendig.

Gemäß zumindest einer Ausführungsform umfasst die erste Kunststoffführungsschiene einen Führungsschienenkanal für ein Antriebskabel.

Der Führungsschienenkanal ist beispielsweise in die erste Kunststoffführungsschiene integriert und wird einstückig mit der ersten Kunststoffführungsschiene hergestellt.

Gemäß zumindest einer Ausführungsform ist der Führungsschienenkanal als Spritzgussbauteil ausgebildet und in die Kunststoffführungsschiene eingelassen.

Der Führungsschienenkanal wird beispielsweise gemeinsam mit der Kunststoffführungsschiene als ein Spritzgussbauteil hergestellt. Alternativ sind der Führungsschienenkanal und die erste Kunststoffführungsschiene separat hergestellte Spritzgussbauteile und werden nach ihrer Herstellung zusammengefügt. Der Führungsschienenkanal ist in die Kunststoffführungsschiene integriert.

Gemäß zumindest einer Ausführungsform ist der Führungsschienenkanal als Extrusionsbauteil ausgebildet und in die Kunststoffführungsschiene eingelassen oder eingelegt.

Alternative ist der Führungsschienenkanal als hinterschnittiges Profil, Rollformprofil und/oder Alustrangguss ausgebildet. Der Führungsschienenkanal ist beispielsweise ein separates Bauteil, das durch Extrusion hergestellt wird und nachträglich in die erste Kunststoffführungsschiene eingelassen wird. Hierdurch werden Geometrien ermöglicht, die mittels Spritzgusses schwierig zu realisieren sind. Beispielsweise wird die Öffnung des Führungsschienenkanals, die schwierig zu gießen ist, realisiert. Der so extrudierte Führungskanal wird beispielsweise in eine weitere Aussparung der ersten Kunststoffführungsschiene eingelassen.

Alternativ sind die erste Kunststoffführungsschiene und der Führungsschienenkanal koextrudierte Baugruppen, die gemeinsam von artgleichen oder fremdartigen Kunststoffschmelzen zusammengeführt werden.

Das für die erste Kunststoffführungsschiene und/oder den Führungsschienenkanal verwendete Material umfasst beispielsweise Polyurethan, bevorzugt werden abriebfeste Thermoplaste verwendet. Als Thermoplaste werden beispielsweise Polyethylenterephthalat (PET), Polyetheretherketon (PPEK), Polyamide (PA) oder Partiell aromatische Polyamide (PPA) verwendet.

Gemäß zumindest einer Ausführungsform umfasst der Führungsschienenkanal einen verlängerten Bereich, der den Führungsschienenkanal entlang der zweiten Haupterstreckungsachse verlängert und der eingerichtet ist eine Führung und Aufnahme für eine Rollovorrichtung oder eine Akustikdichtung oder eine Innenhimmelanbindung bereitzustellen.

Als kombiniertes Bauteil, dass sowohl ein Antriebskabel als auch eine Rollovorrichtung aufnehmen und führen kann, wird eine Montage vereinfacht. Der Führungsschienenkanal, der den verlängerten Bereich umfasst, kann nachträglich in die erste Kunststoffführungsschiene eingelegt oder integriert werden.

Der verlängerte Bereich des Führungsschienenkanals ist nicht auf die Führung und Aufnahme von Rollovorrichtungen beschränkt. Alternativ oder zusätzlich ist der verlängerte Bereich des Führungsschienenkanals dazu geeignet andere Baugruppen aufzunehmen und/oder abzustützen.

Gemäß zumindest einer Ausführungsform umfasst das Rahmenelement einen zweiten Verstärkungsabschnitt, der mit dem Hauptabschnitt verbunden ist und den Hauptabschnitt entlang der zweiten Haupterstreckungsachse verlängert, wobei der zweite Verstärkungsabschnitt zur Stabilisierung des Führungsschienenkanals eingerichtet ist.

Der zweite Verstärkungsabschnitt ist beispielsweise aus dem ersten Verstärkungsabschnitt des Rahmenelements ausgeformt. Zum Beispiel wird ein Teil des ersten Verstärkungsabschnitts ausgestanzt oder ausgeschnitten und umgebogen, um so den zweiten Verstärkungsabschnitt zu realisieren. Dies ermöglicht es, dass das Material des Rahmenelements nahezu vollständig verwendet wird. Auf zusätzliche Befestigungsmittel, wie zum Beispiel mittels Schweißungen, Nieten, Schrauben, Bolzen oder dergleichen kann verzichtet werden, um die Verstärkungsabschnitte zu realisieren. Dies vereinfacht eine Herstellung und Montage des Rahmenelements.

An dem zweiten Verstärkungsabschnitt ist beispielsweise der verlängerte Bereich des Führungsschienenkanals angeordnet. Der verlängerte Bereich des Führungsschienenkanals ist zumindest an dem zweiten Verstärkungsabschnitt abgestützt. Der verlängerte Bereich ist alternativ oder zusätzlich an dem zweiten Verstärkungsabschnitt angeklebt oder durch Umspritzen angeformt. Der verlängerte Bereich ist alternativ oder zusätzlich mit dem zweiten Verstärkungsabschnitt mittels stoffschlüssiger Verfahren verbunden. Stoffschlüssige Verfahren sind in diesem Zusammenhang beispielsweise Schweißen, wie zum Beispiel Ultraschall- oder Rührreibschweißen. Das Material des verlängerten Bereichs umfasst beispielsweise Polyurethan, bevorzugt abriebfeste Thermoplaste. Als Thermoplaste werden beispielsweise Polyethylenterephthalat (PET), Polyetheretherketon (PPEK), Polyamide (PA) oder Partiell aromatische Polyamide (PPA) verwendet.

Gemäß einem Ausführungsbeispiels ist der zweite Verstärkungsabschnitt zur Aufnahme einer zweiten Kunststoffführungsschiene eingerichtet.

Die zweite Kunststoffführungsschiene ist beispielsweise dazu eingerichtet eine Rollovorrichtung aufzunehmen und/oder zu führen. An dem zweiten Verstärkungsabschnitt ist beispielsweise die zweite Kunststoffführungsschiene angeordnet. Die zweite Kunststoffführungsschiene ist zumindest an dem zweiten Verstärkungsabschnitt abgestützt. Die zweite Kunststoffführungsschiene ist alternativ oder zusätzlich an dem zweiten Verstärkungsabschnitt angeklebt oder durch Umspritzen angeformt. Die zweite Kunststoffführungsschiene ist alternativ oder zusätzlich mittels stoffschlüssiger Verfahren am zweiten Verstärkungsabschnitt befestigt. Stoffschlüssige Verfahren sind in diesem Zusammenhang beispielsweise Schweißen, wie zum Beispiel Ultraschall- oder Rührreibschweißen. Die zweite Kunststoffführungsschiene ist insbesondere ein separat hergestelltes Bauteil. Das Material der zweiten Kunststoffführungsschiene umfasst beispielsweise Polyurethan, bevorzugt Thermoplast. Als Thermoplaste werden beispielsweise Polyethylenterephthalat (PET), Polyetheretherketon (PPEK), Polyamide (PA) oder Partiell aromatische Polyamide (PPA) verwendet.

Die zweite Kunststoffführungsschiene ist nicht auf die Führung und Aufnahme von Rollovorrichtungen beschränkt. Alternativ oder zusätzlich ist die zweite Kunststoffführungsschiene dazu geeignet andere Baugruppen aufzunehmen und/oder abzustützen.

Gemäß zumindest einer Ausführungsform ist das Rahmenelement entlang der Haupterstreckungsachse alternierend ausgeformt, so dass entlang der ersten Haupterstreckungsachse der erste Verstärkungsabschnitt und der zweite Verstärkungsabschnitt abwechselnd zumindest teilweise aus dem Hauptabschnitt herausragen.

Zur Erhöhung der Stabilität erstreckt sich der zweite Verstärkungsabschnitt nicht durchgängig entlang der ersten Haupterstreckungsachse und ist entlang der ersten Haupterstreckungsachse unterbrochen. In den Bereichen, in denen der zweite Verstärkungsabschnitt aus dem Hauptabschnitt herausragt, ist der erste Verstärkungsabschnitt zumindest teilweise vorhanden. Alternativ ist in den Bereichen entlang der ersten Haupterstreckungsachse, in denen der zweite Verstärkungsabschnitt aus dem Hauptabschnitt herausragt, kein erster Verstärkungsabschnitt vorhanden.

Gemäß zumindest einer Ausführungsform ist das Rahmenelement aus Metall gebildet oder weist ein solches Material auf.

Gemäß zumindest einer Ausführungsform ist das Rahmenelement aus Stahl gebildet oder weist ein solches Material auf.

Ein Rahmenelement aus Metall oder Stahl ist leicht zu produzieren, robust und maßhaltig. Das Metall- oder Stahlrahmenelement generiert die notwendige Stabilität, indem das Rahmenelement in die Kunststoffführungsschiene ragt.

Gemäß zumindest einer Ausführungsform umgibt der erste Verstärkungsabschnitt den mindestens einen Aufnahmekanal teilweise und stabilisiert den Aufnahmekanal.

Bei einem Unfall, insbesondere bei einem Frontalunfall also einer Kollision mit einem Hindernis in Fahrtrichtung, ist es möglich, dass der Deckel relativ zum Fahrzeug so stark beschleunigt wird, dass die Kopplung zwischen dem Deckel und der ersten Kunststoffführungsschiene zu schwach ist, um den Deckel zu halten. Der erste Verstärkungsabschnitt liefert zusätzliche Stabilität für den mindestens einen Aufnahmekanal, um diese Gefahr zumindest zu reduzieren. Im Zusammenspiel mit den Halteabschnitten des Schlittens wird somit verhindert, dass sich der Deckel vom Fahrzeugdach lösen kann.

Die beschriebene Rahmenanordnung weist eine geringe Anzahl an Komponenten auf und ist entsprechend mit einer geringen Anzahl an Produktions- oder Montageschritten realisierbar.

Sie kann somit kostengünstig und zeitsparend hergestellt und platzsparend im Bereich eines Fahrzeugdachs integriert werden. Da keine zusätzlichen Kopplungsmittel und Befestigungsmittel nötig sind, um das Rahmenelement und die Kunststoffführungsschienen zu koppeln, wird während der Montage weniger Bauraum im Fahrzeug für die Werkzeugzugänglichkeit benötigt.

Gemäß einem Aspekt umfasst ein Fahrzeug ein Fahrzeugdach und eine Ausgestaltung der zuvor beschriebenen Rahmenanordnung, wobei die Rahmenanordnung mit dem Fahrzeugdach fest gekoppelt ist.

Das Kraftfahrzeug ermöglicht im Wesentlichen die oben genannten Vorteile und Funktionen.

Ausführungsbeispiele der Offenbarung sind im Folgenden anhand der schematischen Zeichnungen näher erläutert.

Es zeigen:
- Figur 1: eine schematische Darstellung eines Teils eines Fahrzeugs gemäß einem Ausführungsbeispiel,
- Figur 2: eine schematische Schnittansicht einer Rahmenanordnung gemäß einem Ausführungsbeispiel,
- Figur 3: eine schematische Schnittansicht einer Rahmenanordnung gemäß einem Ausführungsbeispiel,
- Figur 4: eine schematische Darstellung eines Rahmenelements mit Führungsschiene und Führungsschienenkanal gemäß einem Ausführungsbeispiel,
- Figur 5: eine schematische Darstellung eines Rahmenelements gemäß einem Ausführungsbeispiel,
- Figur 6: eine schematische Schnittansicht einer Rahmenanordnung gemäß einem Ausführungsbeispiel .

Elemente gleicher Konstruktion und Funktion sind figurenübergreifend mit den gleichen Bezugszeichen gekennzeichnet.

In dieser Beschreibung beziehen sich Begriffe, wie "oben", "unten", "Oberseite", "Unterseite", "innen" und "außen", "vorne" und "hinten", auf Ausrichtungen und Orientierungen, wie sie in den Figuren illustriert und bei einem betriebsbereiten Kraftfahrzeug üblich sind.

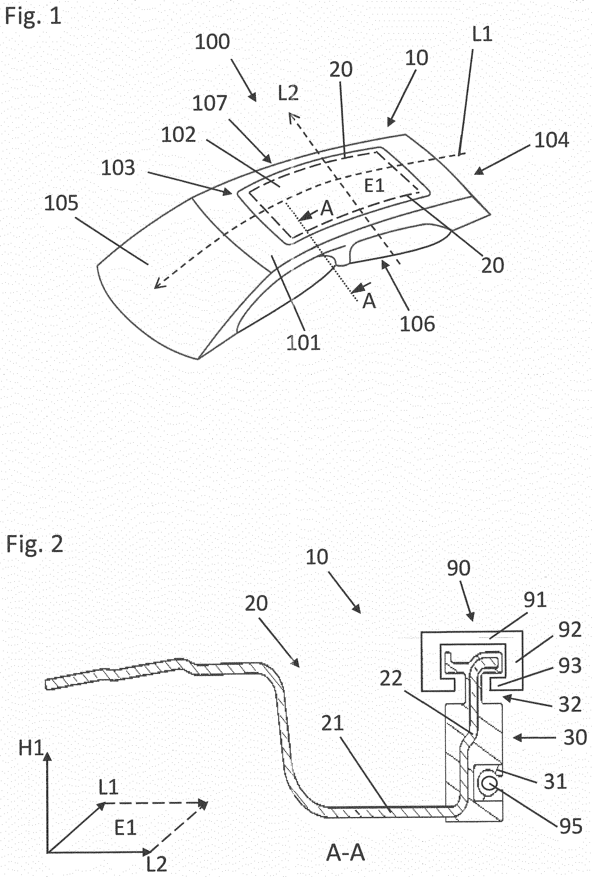

Figur 1 zeigt eine Rahmenanordnung 10 für ein Fahrzeugdach 101 eines Fahrzeugs 100, die zum Beispiel eine Fahrzeugöffnung 103 in dem Fahrzeugdach 101 umgibt. Ein Deckel 102 ist dazu ausgebildet ist, die Fahrzeugöffnung 103 in dem Fahrzeugdach 101 zu verschließen. Der Deckel 102 ist beispielsweise Teil eines Panoramadachs, eines Spoilerdachs, eines Schiebedachs, beispielsweise eines außen geführten Schiebedachs, und/oder eines Schiebehebedachs, eines von oben montierbaren Daches, auch Topload genannt, oder eines von unten montierbaren Daches, auch Bottomload genannt. Der Deckel 102 ist beispielsweise aus Glas oder einem transparenten Kunststoff.

Das Fahrzeug 100 umfasst weiterhin eine Heckscheibe 104 und eine Frontscheibe 105. Eine erste Haupterstreckungsachse L1 erstreckt sich von der Heckscheibe 104 zur Frontscheibe 105.

Eine zweite Haupterstreckungsachse L2 liegt quer zur ersten Haupterstreckungsachse L1 und erstreckt sich von einer ersten Fahrzeuglängsseite 106, die die Heckscheibe 104 und die Frontscheibe 105 verbindet, zu einer der ersten Fahrzeuglängsseite 106 gegenüberliegenden zweiten Fahrzeuglängsseite 107, die ebenfalls die Heckscheibe 104 und die Frontscheibe 105 verbindet. Die erste Fahrzeuglängsseite 106, die zweite Fahrzeuglängsseite 107, die Heckscheibe 104 und die Frontscheibe 105 umschließen das Fahrzeugdach 101, den Deckel 102 und die Rahmenanordnung 10. Die Rahmenanordnung 10 umfasst mindestens ein Rahmenelement 20, das sich entlang der ersten Haupterstreckungsachse L1 erstreckt. Das Rahmenelement 20 ist an der ersten Fahrzeuglängsseite 106 angeordnet. Ein weiteres Rahmenelement 20 ist entlang der zweiten Fahrzeuglängsseite 107 angeordnet.

Eine erste Haupterstreckungsebene E1 wird durch die erste Haupterstreckungsachse L1 und die zweite Haupterstreckungsachse L2 aufgespannt. Die erste Haupterstreckungsebene E1 erstreckt sich beispielsweise entlang der ersten Haupterstreckungsachse L1, wie sie bei einem betriebsbereiten Kraftfahrzeug üblich ist. Die erste Haupterstreckungsebene E1 erstreckt sich zudem beispielsweise entlang der zweiten Haupterstreckungsachse L2, wie sie bei einem betriebsbereiten Kraftfahrzeug üblich ist. Die zweite Haupterstreckungsachse L2 ist gleichgerichtet mit einer Schnittachse A-A. Die Schnittachse A-A ist als gepunktete Linie mit zwei Pfeilen, die die Betrachtungsrichtung angeben, angedeutet. Die Betrachtungsrichtung verläuft entlang der ersten Haupterstreckungsachse L1.

Figur 2 zeigt ein Ausführungsbeispiel der Rahmenanordnung 10 in einer schematischen Schnittansicht entlang der Schnittachse A-A aus Figur 1. Die Rahmenanordnung 10 umfasst das Rahmenelement 20 und eine erste Kunststoffführungsschiene 30. Das Rahmenelement 20 erstreckt sich entlang der ersten Haupterstreckungsachse L1. Das Rahmenelement 20 umfasst einen Hauptabschnitt 21, der entlang der ersten Haupterstreckungsebene E1 angeordnet ist. Das Rahmenelement 20 umfasst weiterhin einen ersten Verstärkungsabschnitt 22, der sich entlang der ersten Haupterstreckungsachse L1 erstreckt und mit dem Hauptabschnitt 21 verbunden ist. Der erste Verstärkungsabschnitt 22 ragt entlang einer Hochachse H1 aus der ersten Haupterstreckungsebene E1 heraus. Die Hochachse H1 steht beispielsweise senkrecht oder geneigt auf der ersten Haupterstreckungsebene E1.

Die erste Kunststoffführungsschiene 30 erstreckt sich entlang der ersten Haupterstreckungsachse L1 und der Hochachse H1. Die erste Kunststoffführungsschiene 30 umgibt den ersten Verstärkungsabschnitt 22 zur Stabilisierung der ersten Kunststoffführungsschiene 30 zumindest teilweise. Die erste Kunststoffführungsschiene 30 umfasst beispielsweise Polyurethan, bevorzugt Thermoplast. Als Thermoplaste werden beispielsweise Polyethylenterephthalat (PET), Polyetheretherketon (PPEK), Polyamide (PA) oder Partiell aromatische Polyamide (PPA) verwendet.

Die erste Kunststoffführungsschiene 30 umfasst einen Führungsschienenkanal 31 für ein Antriebskabel 95 und mindestens einen Aufnahmekanal 32 für einen Schlitten 90. Der Schlitten 90 ist dazu ausgebildet in der ersten Kunststoffführungsschiene 30 geführt zu werden und relativ zu der ersten Kunststoffführungsschiene 30 bewegt zu werden. Der Schlitten 90 weist beispielsweise einen Hauptteil 91 und zwei damit verbundene Seitenteile 92 auf. Der Hauptteil 91 ist entlang der ersten Haupterstreckungsebene E1 angeordnet und die beiden Seitenteile 92 ragen aus dem Hauptteil 91 entlang der Hochachse H1 heraus. Die Seitenteile 92 sind mit einem ersten Ende mit dem Hauptteil 91 verbunden. Zusätzlich weisen die beiden Seitenteile 92 an einem zweiten Ende des Schlittens 90, welches dem ersten Ende entlang der Hochachse H1 gegenüberliegt, jeweils einen klammerartigen Halteabschnitt 93 auf. Die Geometrie des Schlittens 90 ermöglicht es somit, dass der Schlitten 90 in den beiden Aufnahmekanälen 32 der Kunststoffführungsschiene 30 mit den Halteabschnitten 93 eingreifen kann. Alternativ greift der Schlitten 90 mit nur einem Halteabschnitt 93 in nur einen Aufnahmekanal 32 ein.

Das Antriebskabel 95 ist mit dem Schlitten 90 gekoppelt. Das Antriebskabel 95 ist ausgebildet, sowohl Zug- als auch Schubkräfte auf den Schlitten 90 zu übertragen. Insbesondere ist das Antriebskabel 95 drucksteif ausgelegt.

Der Führungsschienenkanal 31 ist beispielsweise in die erste Kunststoffführungsschiene 30 integriert und wird einstückig mit der ersten Kunststoffführungsschiene 30 hergestellt. Beispielsweise mittels eines Spritzgussverfahrens. Alternativ oder zusätzlich ist der Führungsschienenkanal 31 ein separates Bauteil. Alternativ ist der Führungsschienenkanal 31 beispielsweise durch Extrusion hergestellt und wird nachträglich in die erste Kunststoffführungsschiene 30 eingelassen. Alternativ sind die erste Kunststoffführungsschiene 30 und der Führungsschienenkanal 31 koextrudierte Baugruppen, die gemeinsam von artgleichen oder fremdartigen Kunststoffschmelzen zusammengeführt werden. Der Führungsschienenkanal 31 umfasst beispielsweise Polyurethan, bevorzugt werden abriebfeste Thermoplaste verwendet. Als Thermoplaste werden beispielsweise Polyethylenterephthalat (PET), Polyetheretherketon (PPEK), Polyamide (PA) oder Partiell aromatische Polyamide (PPA) verwendet. Alternativ oder zusätzlich umfasst der Führungsschienenkanal 31 Metall.

Die erste Kunststoffführungsschiene 30 ermöglicht es in vorteilhafterweise Aussparungen oder Bereiche für andere funktionelle Baugruppen zu realisieren. Auch, wenn beispielsweise Wasserabläufe ebenfalls in der ersten Kunststoffführungsschiene 30 integriert werden können, ohne dass eine aufwendige Nachbearbeitung der ersten Kunststoffführungsschiene 30 oder eine zusätzliche Montage mittels Befestigungsmittel notwendig wird. So ist es eine Verwendung bevorzugt im Trockenbereich vorgesehen. Beispielsweise um Windabweiser anzubinden.

Der erste Verstärkungsabschnitt 22 und die erste Kunststoffführungsschiene 30 bilden gemeinsam eine einheitliche Baugruppe. Der erste Verstärkungsabschnitt 22 bietet demnach zusätzlichen Halt für die erste Kunststoffführungsschiene 30, was insgesamt eine stabilere Rahmenanordnung 10 schafft.

Die erste Kunststoffführungsschiene 30 umgibt den ersten Verstärkungsabschnitt 22 und/oder den Hauptabschnitt 21 zur Stabilisierung der ersten Kunststoffführungsschiene 30 zumindest teilweise. Alternativ wird nur der erste Verstärkungsabschnitt 22 von der ersten Kunststoffführungsschiene 30 umgeben. Die erste Kunststoffführungsschiene 30 ist beispielsweise ein Spritzgussbauteil und wird an den ersten Verstärkungsabschnitt 22 angespritzt oder umspritzt den ersten Verstärkungsabschnitt 22. Zusätzlich ist es auch möglich den Hauptabschnitt 21 zu umspritzen oder den ersten Verstärkungsabschnitt 22 an den Hauptabschnitt 21 anzuspritzen.

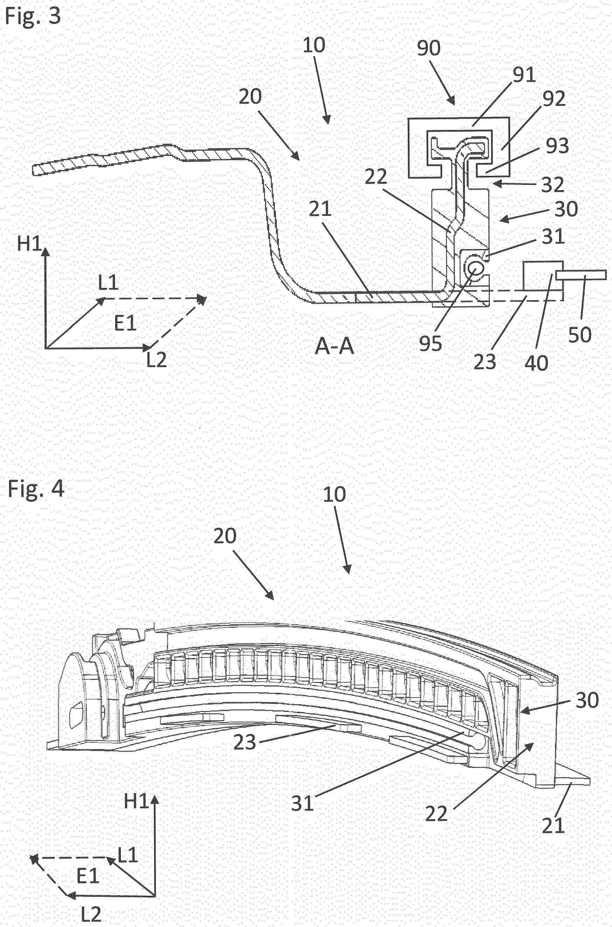

Figur 3 zeigt ein Ausführungsbeispiel der Rahmenanordnung 10 in einer schematischen Schnittansicht entlang der Schnittachse A-A aus Figur 1. Figur 3 zeigt im Wesentlichen die gleiche Rahmenanordnung 10, wie in Figur 2 dargestellt mit dem Unterschied, dass das Rahmenelement 20 einen zweiten Verstärkungsabschnitt 23 umfasst, der mit dem Hauptabschnitt 21 verbunden ist und den Hauptabschnitt 21 entlang der zweiten Haupterstreckungsachse L2 verlängert. Der zweite Verstärkungsabschnitt 23 ist zur Aufnahme einer zweiten Kunststoffführungsschiene 40 geeignet. Der zweite Verstärkungsabschnitt 23 ist beispielsweise aus dem ersten Verstärkungsabschnitt 22 des Rahmenelements 20 ausgeformt. Zum Beispiel wird ein Teil des ersten Verstärkungsabschnitts 22 ausgestanzt oder ausgeschnitten und umgebogen, um so den zweiten Verstärkungsabschnitt 23 zu realisieren. Auf zusätzliche Befestigungsmittel, wie zum Beispiel Schweißungen, Nieten, Schrauben, Bolzen oder dergleichen kann verzichtet werden, um den ersten Verstärkungsabschnitt 22 und den zweiten Verstärkungsabschnitt 23 zu realisieren. Dies vereinfacht eine Herstellung und Montage des Rahmenelements 20.

Die zweite Kunststoffführungsschiene 40 ist beispielsweise an dem zweiten Verstärkungsabschnitt 23 angeklebt oder durch Umspritzen angeformt. Die zweite Kunststoffführungsschiene 40 umfasst beispielsweise Polyurethan, bevorzugt Thermoplast. Als Thermoplaste werden beispielsweise Polyethylenterephthalat (PET), Polyetheretherketon (PPEK), Polyamide (PA) oder Partiell aromatische Polyamide (PPA) verwendet. Die zweite Kunststoffführungsschiene 40 ist beispielsweise zum Führen einer Rollovorrichtung 50 geeignet. In Figur 3 ist die Rollovorrichtung 50 nur angedeutet und stellt nicht die vollständige Rollovorrichtung 50 dar. Die zweite Kunststoffführungsschiene 40 ist nicht auf die Führung und Aufnahme von Rollovorrichtungen 50 beschränkt. Alternativ oder zusätzlich ist die zweite Kunststoffführungsschiene 40 dazu geeignet andere Baugruppen aufzunehmen und/oder abzustützen.

Figur 4 zeigt eine schematische Darstellung eines Rahmenelements 20 gemäß einem Ausführungsbeispiel. Das Rahmenelement 20 erstreckt sich entlang der ersten Haupterstreckungsachse L1. Das Rahmenelement 20 umfasst den Hauptabschnitt 21, der sich entlang der ersten Haupterstreckungsebene E1 erstreckt. Der erste Verstärkungsabschnitt 22, erstreckt sich entlang der ersten Haupterstreckungsachse L1 und ist mit dem Hauptabschnitt 21 verbunden. Der erste Verstärkungsabschnitt 22 ragt entlang der Hochachse H1 aus der ersten Haupterstreckungsebene E1 heraus. Der zweite Verstärkungsabschnitt 23 ist mit dem Hauptabschnitt 21 verbunden und verlängert den Hauptabschnitt 21 entlang der zweiten Haupterstreckungsachse L2. Der erste Verstärkungsabschnitt 22 ist von der ersten Kunststoffführungsschiene 30 umgeben und befindet sich innerhalb der ersten Kunststoffführungsschiene 30. Die erste Kunststoffführungsschiene 30 umgibt zumindest teilweise den Hauptabschnitt 21. Die erste Kunststoffführungsschiene 30 wird durch den erste Verstärkungsabschnitt 22 stabilisiert. Der Hauptabschnitt 21 stabilisiert die erste Kunststoffführungsschiene 30 zusätzlich. Der erste Verstärkungsabschnitt 22 und der zweite Verstärkungsabschnitt 23 ragen abwechselnd aus dem Hauptabschnitt 21 entlang der ersten Haupterstreckungsachse L1 heraus.

Der Führungsschienenkanal 31 ist beispielsweise in die erste Kunststoffführungsschiene 30 integriert und wird einstückig mit der ersten Kunststoffführungsschiene 30 hergestellt. Beispielsweise mittels eines Spritzgussverfahrens. Alternativ oder zusätzlich ist der Führungsschienenkanal 31 ein separates Bauteil. Alternativ ist der Führungsschienenkanal 31 durch Extrusion hergestellt und wird nachträglich in die erste Kunststoffführungsschiene 30 eingelassen.

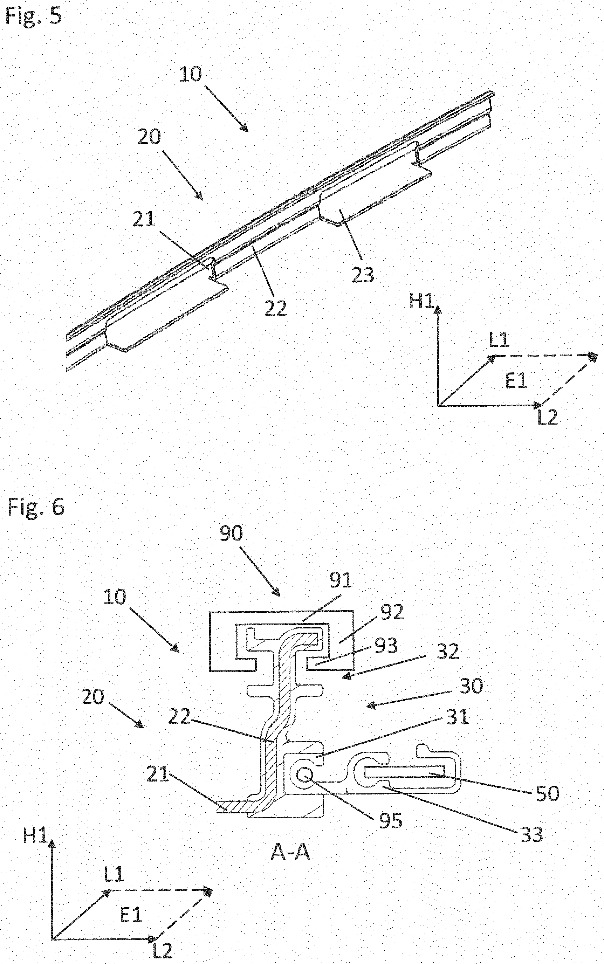

Figur 5 zeigt eine schematische Darstellung eines Rahmenelements 20 gemäß einem Ausführungsbeispiel. Das Rahmenelement 20 erstreckt sich entlang der ersten Haupterstreckungsachse L1. Das Rahmenelement 20 umfasst den Hauptabschnitt 21, der sich entlang der ersten Haupterstreckungsebene E1 erstreckt. Der erste Verstärkungsabschnitt 22, erstreckt sich entlang der ersten Haupterstreckungsachse L1 und ist mit dem Hauptabschnitt 21 verbunden. Der erste Verstärkungsabschnitt 22 ragt entlang der Hochachse H1 aus der ersten Haupterstreckungsebene E1 heraus. Der zweite Verstärkungsabschnitt 23 ist mit dem Hauptabschnitt 21 verbunden und verlängert den Hauptabschnitt 21 entlang der zweiten Haupterstreckungsachse L2. Der erste Verstärkungsabschnitt 22 und der zweite Verstärkungsabschnitt 23 ragen abwechselnd aus dem Hauptabschnitt 21 entlang der ersten Haupterstreckungsachse L1 heraus. In den Bereichen, in denen der zweite Verstärkungsabschnitt 23 aus dem Hauptabschnitt 21 entlang der zweiten Haupterstreckungsachse L2 herausragt, ist der erste Verstärkungsabschnitt 22 nur teilweise vorhanden. In den Bereichen, in denen der erste Verstärkungsabschnitt 22 aus dem Hauptabschnitt 21 entlang der Hochachse H1 herausragt, ist der zweite Verstärkungsabschnitt 23 nicht vorhanden. Alternativ kann in den Bereichen entlang der ersten Haupterstreckungsachse L1, in denen der zweite Verstärkungsabschnitt 23 aus dem Hauptabschnitt 21 herausragt, kein erster Verstärkungsabschnitt 22 vorhanden sein.

Figur 6 zeigt ein Ausführungsbeispiel der Rahmenanordnung 10 in einer schematischen Schnittansicht entlang der Schnittachse A-A aus Figur 1. Figur 6 zeigt im Wesentlichen die gleiche Rahmenanordnung 10, wie in Figur 2 dargestellt mit dem Unterschied, dass der Führungsschienenkanal 31 einen verlängerten Bereich 33 umfasst. Der verlängerte Bereich 33 verlängert den Führungsschienenkanal 31 entlang der zweiten Haupterstreckungsachse L2. Der verlängerte Bereich 33 ist dazu eingerichtet beispielsweise eine Führung und Aufnahme für eine Rollovorrichtung 50 bereitzustellen. In Figur 6 ist die Rollovorrichtung 50 nur angedeutet und stellt nicht die vollständige Rollovorrichtung 50 dar. Als kombiniertes Bauteil, dass sowohl ein Antriebskabel 95 als auch eine Rollovorrichtung 50 aufnehmen und führen kann, wird eine Montage vereinfacht. Der Führungsschienenkanal 31, der den verlängerten Bereich 33 umfasst, kann nachträglich in die erste Kunststoffführungsschiene 30 eingelegt oder integriert werden. Der verlängerte Bereich 33 des Führungsschienenkanals 31 ist nicht auf die Führung und Aufnahme von Rollovorrichtungen 50 beschränkt. Alternativ oder zusätzlich ist der verlängerte Bereich des Führungsschienenkanals dazu geeignet andere Baugruppen aufzunehmen und/oder abzustützen. Eine Kombination aus dem zweiten Verstärkungsabschnitt 23 (nicht dargestellt in Figur 6) und dem verlängerten Bereich 33 des Führungsschienenkanals 31 ist ebenfalls möglich.

Der verlängerte Bereich 33 des Führungsschienenkanals 31 ist beispielsweise am zweiten Verstärkungsabschnitt 23 (nicht dargestellt in Figur 6) angeordnet. Der verlängerte Bereich 33 des Führungsschienenkanals 31 ist zumindest an dem zweiten Verstärkungsabschnitt 23 abgestützt. Der verlängerte Bereich 33 ist alternativ oder zusätzlich an dem zweiten Verstärkungsabschnitt 23 angeklebt oder durch Umspritzen angeformt. Das Material des verlängerten Bereichs 33 umfasst beispielsweise Polyurethan.

### Bezugszeichenliste

- 10: Rahmenanordnung
- 20: Rahmenelement
- 21: Hauptabschnitt
- 22: erster Verstärkungsabschnitt
- 23: zweiter Verstärkungsabschnitt
- 30: erste Kunststoffführungsschiene
- 31: Führungsschienenkanal
- 32: Aufnahmekanal
- 33: verlängerter Bereich
- 40: zweite Kunststoffführungsschiene
- 50: Rollovorrichtung
- 90: Antriebskabel
- 95: Schlitten

- 100: Fahrzeug
- 101: Fahrzeugdach
- 102: Deckel
- 103: Fahrzeugöffnung
- 104: Heckscheibe
- 105: Frontscheibe
- 106: erste Fahrzeuglängsseite
- 107: zweite Fahrzeuglängsseite

- L1: erste Haupterstreckungsachse
- L2: zweite Haupterstreckungsachse
- H1: Hochachse
- E1: erste Haupterstreckungsebene

## Patentansprüche

1. Rahmenanordnung (10) für ein Fahrzeugdach (101) zur Lagerung eines ausstellbaren und verschiebbaren Deckels (102), umfassend
- ein Rahmenelement (20), das sich entlang einer ersten Haupterstreckungsachse (L1) erstreckt, umfassend
- einen Hauptabschnitt (21), der in einer ersten Haupterstreckungsebene (E1) liegt, die durch die erste Haupterstreckungsachse (L1) und eine zweite Haupterstreckungsachse (L2) aufgespannt wird, und
- einen ersten Verstärkungsabschnitt (22), der mit dem Hauptabschnitt (21) verbunden ist und entlang einer Hochachse (H1) aus der ersten Haupterstreckungsebene (E1) herausragt,
- eine erste Kunststoffführungsschiene (30) mit mindestens einem Aufnahmekanal (32) für einen Schlitten (90), wobei
- sich die erste Kunststoffführungsschiene (30) entlang der ersten Haupterstreckungsachse (L1) und der Hochachse (H1) erstreckt und **dadurch gekennzeichnet, dass**
- die erste Kunststoffführungsschiene (30) den ersten Verstärkungsabschnitt (22) zur Stabilisierung der ersten Kunststoffführungsschiene (30) zumindest teilweise umgibt.

2. Rahmenanordnung (10) nach Anspruch 1, wobei die erste Kunststoffführungsschiene (30) den Hauptabschnitt (21) zur Stabilisierung der erste Kunststoffführungsschiene (30) zumindest teilweise umgibt.

3. Rahmenanordnung (10) nach Anspruch 1 oder 2, wobei die erste Kunststoffführungsschiene (30) als Spritzgussbauteil ausgebildet ist.

4. Rahmenanordnung (10) nach einem der vorhergehenden Ansprüche, wobei die erste Kunststoffführungsschiene (30) einen Führungsschienenkanal (31) für ein Antriebskabel (95) umfasst.

5. Rahmenanordnung (10) nach Anspruch 4, wobei der Führungsschienenkanal (31) als Spritzgussbauteil ausgebildet ist und in die Kunststoffführungsschiene (30) eingelassen ist.

6. Rahmenanordnung (10) nach Anspruch 4, wobei der Führungsschienenkanal (31) als Extrusionsbauteil ausgebildet ist und in die Kunststoffführungsschiene (30) eingelassen ist.

7. Rahmenanordnung (10) nach einem der Ansprüche 4 bis 6, wobei der Führungsschienenkanal (31) einen verlängerten Bereich (33) umfasst, der den Führungsschienenkanal (31) entlang der zweiten Haupterstreckungsachse (L2) verlängert und der eingerichtet ist eine Führung und Aufnahme für eine Rollovorrichtung oder eine Akustikdichtung oder eine Innenhimmelanbindung bereitzustellen.

8. Rahmenanordnung (10) nach einem der Ansprüche 4 bis 7, wobei das Rahmenelement (20) einen zweiten Verstärkungsabschnitt (23) umfasst, der mit dem Hauptabschnitt (21) verbunden ist und den Hauptabschnitt (21) entlang der zweiten Haupterstreckungsachse (L2) verlängert, wobei der zweite Verstärkungsabschnitt (23) zur Stabilisierung des Führungsschienenkanals (31) eingerichtet ist.

9. Rahmenanordnung (10) nach Anspruch 8, wobei der zweite Verstärkungsabschnitt (23) zur Aufnahme einer zweiten Kunststoffführungsschiene (40) eingerichtet ist.

10. Rahmenanordnung (10) nach Anspruch 8 oder 9, wobei das Rahmenelement (20) entlang der Haupterstreckungsachse (L1) alternierend ausgeformt ist, so dass entlang der ersten Haupterstreckungsachse (L1) der erste Verstärkungsabschnitt (22) und der zweite Verstärkungsabschnitt (23) abwechselnd zumindest teilweise aus dem Hauptabschnitt (21) herausragen.

11. Rahmenanordnung (10) nach einem der vorhergehenden Ansprüche, wobei das Rahmenelement (20) aus Metall gebildet ist oder ein solches Material aufweist.

12. Rahmenanordnung (10) nach einem der vorhergehenden Ansprüche, wobei das Rahmenelement (20) aus Stahl gebildet ist oder ein solches Material aufweist.

13. Rahmenanordnung (10) nach einem der vorhergehenden Ansprüche, wobei der erste Verstärkungsabschnitt (22) den mindestens einen Aufnahmekanal (32) teilweise umgibt und stabilisiert.

14. Fahrzeug (100), umfassend ein Fahrzeugdach (101) und eine Rahmenanordnung (10) nach einem der vorhergehenden Ansprüche, wobei die Rahmenanordnung (10) mit dem Fahrzeugdach (101) fest gekoppelt ist.

## Claims

1. Frame arrangement (10) for a vehicle roof (101) for supporting a deployable and displaceable cover (102), comprising
- a frame element (20), which extends along a first main extension axis (L1), comprising
- a main portion (21) lying in a first main extension plane (E1) spanned by the first main extension axis (L1) and a second main extension axis (L2), and
- a first reinforcing portion (22), which is connected to the main portion (21) and projects along a vertical axis (H1) from the first main extension plane (E1),
- a first plastic guide rail (30) with at least one receiving channel (32) for a carriage (90), wherein
- the first plastic guide rail (30) extends along the first main extension axis (L1) and the vertical axis (H1), and **characterized in that**
- the first plastic guide rail (30) at least partially surrounds the first reinforcing portion (22) for stabilizing the first plastic guide rail (30).

2. Frame arrangement (10) according to Claim 1, wherein the first plastic guide rail (30) at least partially surrounds the main portion (21) for stabilizing the first plastic guide rail (30).

3. Frame arrangement (10) according to Claim 1 or 2, wherein the first plastic guide rail (30) is designed as an injection-moulded component.

4. Frame arrangement (10) according to one of the preceding claims, wherein the first plastic guide rail (30) comprises a guide rail channel (31) for a drive cable (95).

5. Frame arrangement (10) according to Claim 4, wherein the guide rail channel (31) is designed as an injection-moulded component and is embedded in the plastic guide rail (30).

6. Frame arrangement (10) according to Claim 4, wherein the guide rail channel (31) is designed as an extrusion component and is embedded in the plastic guide rail (30).

7. Frame arrangement (10) according to one of Claims 4 to 6, wherein the guide rail channel (31) comprises an extended region (33) which extends the guide rail channel (31) along the second main extension axis (L2) and which is configured to provide a guide and receptacle for a roller blind device or an acoustic seal or an inner canopy connection.

8. Frame arrangement (10) according to one of Claims 4 to 7, wherein the frame element (20) comprises a second reinforcing portion (23) which is connected to the main portion (21) and extends the main portion (21) along the second main extension axis (L2), wherein the second reinforcing portion (23) is configured for stabilizing the guide rail channel (31).

9. Frame arrangement (10) according to Claim 8, wherein the second reinforcing portion (23) is configured to accommodate a second plastic guide rail (40).

10. Frame arrangement (10) according to Claim 8 or 9, wherein the frame element (20) is shaped alternately along the main extension axis (L1), so that along the first main extension axis (L1) the first reinforcing portion (22) and the second reinforcing portion (23) alternately protrude at least partially from the main portion (21).

11. Frame arrangement (10) according to one of the preceding claims, wherein the frame element (20) is formed of metal or comprises such a material.

12. Frame arrangement (10) according to one of the preceding claims, wherein the frame element (20) is formed of steel or comprises such a material.

13. Frame arrangement (10) according to one of the preceding claims, wherein the first reinforcing portion (22) partially surrounds and stabilizes the at least one receiving channel (32).

14. Vehicle (100), comprising a vehicle roof (101) and a frame arrangement (10) according to one of the preceding claims, wherein the frame arrangement (10) is fixedly coupled to the vehicle roof (101).

## Revendications

1. Agencement de cadre (10) pour un toit de véhicule (101) destiné à loger un panneau (102) relevable et coulissant, comprenant
- un élément de cadre (20) s'étendant le long d'un premier axe principal d'extension (L1), comprenant
- une section principale (21) située dans un premier plan principal d'extension (E1), défini par le première axe principal d'extension (L1) et une deuxième axe principal d'extension (L2), et
- une première section de renforcement (22), reliée à la section principale (21) et faisant saillie hors du premier plan principal d'extension (E1) le long d'un axe vertical (H1),
- un premier rail de guidage en matière plastique (30) comportant au moins un canal de réception (32) pour un chariot (90), où
- le premier rail de guidage en matière plastique (30) s'étend le long du premier axe principal d'extension (L1) et de l'axe vertical (H1), et **caractérisé en ce que**
- le premier rail de guidage en matière plastique (30) entoure au moins partiellement la première section de renforcement (22) afin de stabiliser le premier rail de guidage en matière plastique (30).

2. Agencement de cadre (10) selon la revendication 1, où le premier rail de guidage en matière plastique (30) entoure au moins partiellement la section principale (21) afin de stabiliser le premier rail de guidage en matière plastique (30).

3. Agencement de cadre (10) selon la revendication 1 ou 2, où le premier rail de guidage en matière plastique (30) est réalisé sous forme de composant moulé par injection.

4. Agencement de cadre (10) selon l'une quelconque des revendications précédentes, où le premier rail de guidage en matière plastique (30) comprend un canal de rail de guidage (31) pour un câble d'entraînement (95).

5. Agencement de cadre (10) selon la revendication 4, où le canal de rail de guidage (31) est réalisé sous forme de composant moulé par injection et est intégré dans le rail de guidage en matière plastique (30).

6. Agencement de cadre (10) selon la revendication 4, où le canal de rail de guidage (31) est réalisé sous forme de composant extrudé et est intégré dans le rail de guidage en matière plastique (30).

7. Agencement de cadre (10) selon l'une quelconque des revendications 4 à 6, où le canal de rail de guidage (31) comprend une zone prolongée (33) qui prolonge le canal de rail de guidage (31) le long du deuxième axe principal d'extension (L2) et qui est configurée pour fournir un guidage et un logement pour un dispositif de store ou un joint acoustique ou une liaison avec le ciel de toit.

8. Agencement de cadre (10) selon l'une quelconque des revendications 4 à 7, où l'élément de cadre (20) comprend une deuxième section de renforcement (23) reliée à la section principale (21) et prolongeant la section principale (21) le long du deuxième axe principal d'extension (L2), où la deuxième section de renforcement (23) est configurée pour stabiliser le canal de rail de guidage (31).

9. Agencement de cadre (10) selon la revendication 8, où la deuxième section de renforcement (23) est configurée pour recevoir un deuxième rail de guidage en matière plastique (40).

10. Agencement de cadre (10) selon la revendication 8 ou 9, où l'élément de cadre (20) est formé de manière alternée le long de l'axe principal d'extension (L1), de sorte que le long de la première axe principal d'extension (L1), la première section de renforcement (22) et la deuxième section de renforcement (23) font saillie au moins partiellement de la section principale (21) en alternance.

11. Agencement de cadre (10) selon l'une quelconque des revendications précédentes, où l'élément de cadre (20) est formé en métal ou comprend un tel matériau.

12. Agencement de cadre (10) selon l'une quelconque des revendications précédentes, où l'élément de cadre (20) est formé en acier ou comprend un tel matériau.

13. Agencement de cadre (10) selon l'une quelconque des revendications précédentes, où la première section de renforcement (22) entoure au moins partiellement le canal de réception (32) et le stabilise.

14. Véhicule (100), comprenant un toit de véhicule (101) et un agencement de cadre (10) selon l'une quelconque des revendications précédentes, où l'agencement de cadre (10) est couplé de manière rigide au toit de véhicule (101).
